# EUROPEAN PATENT APPLICATION

(11) **EP 1 174 813 A2**
(43) Date of publication of application: **23.01.2002**
(21) Application number: 01306117.1
(22) Date of filing: 17.07.2001
(51) Int. Cl.: G06F 17/60

(54) **Production planning system**

(30) Priority: 18.07.2000 JP 2000217750
(71) Applicant: IDEMITSU PETROCHEMICAL CO., LTD., Tokyo 130-0015 (JP)
(72) Inventor: Nagano, Katsumi, Ichihara-shi, Chiba-ken (JP); Tanaka, Tadahiro, Ichihara-shi, Chiba-ken (JP); Narumi, Kenji, Ichihara-shi, Chiba-ken (JP)
(74) Representative: Rackham, Stephen Neil

(57) **Abstract**

An information transferring system for transferring information between a production planning system (for generating a production plan) and an actual production data collecting system (for collecting actual production data obtained by producing the product based on the production plan) includes an information comparing step (S3) for comparing the actual production data and the production plan; a production plan correcting step (S4) for correcting the production plan based on the actual production data; and a production plan rewriting step (S6) for rewriting the production plan generated by the production planning system to a corrected production plan. Since the production plan correcting step (S4) and the production plan rewriting step (S6) are provided, even when there is an initial difference between the production plan and the actual production, ongoing consistency between the production plan and the actual production can be secured by substituting with the corrected production plan based for the actual production.

## Description

The present invention relates to an information transfer system for transferring information between a production planning system (for generating a production plan of a product by production equipment) and an actual production data collecting system (for collecting actual production data obtained by producing the product based on the production plan), which can be used, for instance, in a process industry for producing synthetic resin such as polyethylene and/or polypropylene.

Recently, more companies have come to introduce an integrated business solution called ERP (Enterprise Resource Planning) package in which overlapping businesses such as sales management, production management, inventory and purchase management, and accounting management are integrated in a single database. Increasing numbers of companies in the chemical process industry dealing with chemical products have introduced such ERP package.

Since the overlapping businesses are integrated in a single database in the integrated business solution, the information input to, for instance, the production management system can be directly used in the sales management system and the accounting system and the information can be accessed in a real-time manner by respective business departments. Further, with the use of the ERP package, the information of a plurality of business departments in a company can be laterally recognized, so that management resources can be optimized.

In an integrated business solution having a sales management system, a production management system and an inventory and purchase management system, a sale plan information generated by the sales management system based on market trends etc. is introduced to the production management system. The production management system utilizes the production plan generating function thereof to generate a production plan in respective factories, based on which of the factories produces the products. Inventory and purchase management systems control the current stocks and procures materials necessary for manufacturing products based on the production plan information generated by the production management system.

Incidentally, a production control system for controlling manufacturing equipment (such as plant) and checking the number and yield rate of the products has been conventionally introduced in a factory where the products are actually produced. The actual production data such as the number of the products manufactured based on the production plan is transferred to the production management system for the benefit of generating the subsequent production plan.

With the use of the above system, since the actual production data in the respective factories is sequentially fed back to the production management system constituting the integrated business solution, the accuracy of the subsequent production plan can be improved and works can be efficiently conducted linking with the other systems.

However, in the above conventional method, when the products cannot be manufactured in line with the production plan in the factories, since the pre-generated production plan is linked with the sales management system and the inventory and purchase management system and is difficult to alter, the deviation between the actual production and the production plan is practically impossible to correct.

Specifically, in a process industry plant for producing synthetic resin such as polyethylene (PE) and polypropylene (PP), different products and products of different grade may be successively produced in a single continuous production line. In this case, assuming that a production plan is generated by the production management system where PP of grade A is manufactured on a predetermined date and time for a predetermined time period and PP of grade C is manufactured thereafter, the production control system produces, based on the production plan, the PP of grade A and shifts to production of the PP of grade C at the time commanded by the production plan. However, in actually manufacturing the synthetic resin, another PP of grade B as a transition grade is necessarily produced in shifting from the grade A to the grade C and the PP of grade C commanded by the production plan cannot be produced during the time, so that manufacturing in line with the production plan becomes impossible.

If the manufacturing time of grade B during shifting process can be predicted, the production plan can be generated considering time lag of the shifting process and production amount of the grade B PP. However, how much and how long the transition grade product is generated in shifting from the grade A PP to the grade C PP depends on various factors such as an operating condition such as manufacturing temperature and the nature of the material and fluctuate accordingly, so that a prediction is extremely difficult.

When the actual production data is transferred from the production control system to the production management system, though the production planned ordered production of grade A and grade C PP, resulted products are grade A, grade C and the transition grade B thereof, so that the production plan differs from the actual production and actual production in compliance with the production plan cannot be preserved.

Accordingly, even when the production plan is generated in the production management system of the integrated business solution, different actual production may be resulted, so that it is impossible to reflect the actual production data in a real-time manner to generate the production plan for appropriately controlling the integrated business solution including the production management system.

Such problem is not only applied to manufacturing of synthetic resin but also is recognized by a process industry field for successively producing a product such as pharmaceutical manufacturing.

An object of the present invention is to go at least some way towards overcoming the above problems by providing an information transfer method and/or a production management system capable of securing ongoing consistency between a production plan and actual achievement even when there is an initial difference between the production plan and the actual achievement.

In a first aspect, the invention consists in an information transfer method for transferring information between a production planning system for generating a production plan of a product using production facilities and an actual production data collecting system for collecting actual production data obtained by producing the product based on the production plan, the method characterized by: an information comparing step for comparing the actual production data collected by the actual production data collecting system and the production plan generated by the production planning system to specify a production plan corresponding to the actual production data; a production plan correcting step for correcting the production plan specified by the information comparing step based on the actual production data; and a production plan rewriting step for rewriting the production plan generated by the production planning system to the production plan corrected by the production plan correcting step.

In the above arrangement, the production planning system is a part of the function of the above-described production management system which is constructed as a part of the integrated business solution such as the ERP package. The actual production data collecting system is a part of a function of a production control system for controlling plant-production of a factory.

The information comparing step for comparing the actual production data and the production plan to specify the production plan corresponding to the actual production data is implemented by extracting plant information and date information from the actual production data, which may additionally extract the grade of the manufactured product for specifying the production plan.

According to the present invention, since the information comparing step is provided, the actual production data and the production plan can be compared to specify the production plan corresponding to the actual production data. Since the production plan correcting step is provided, the specified production plan can be corrected based on the actual production data. Further, since the ^{~}production plan rewriting step is provided, the corrected production plan can be set as the production plan in accordance with the collected actual production data. Accordingly, since the corrected production plan and the actual production can be coordinated even when the actual production is captured by the ERP system, the actual production data can be rapidly collected.

In the above arrangement, the production planning system may preferably be arranged as a part of an integrated business solution for integrally managing sales, production and inventory and purchase of the product.

When the production planning system is constructed as a part of the integrated business solution, since the production plan is difficult to be revised with relation to the other components of the integrated business solution, the present invention can be suitably applied.

When the production planning system includes a production master data setting means for setting product master information such as product number of the product and material thereof and item name, a master information transferring step for transferring the product master information set by the product master data setting means to the actual production data collecting system may preferably be provided.

As mentioned above, since the production management system including the production planning system and the production control system including the actual production data collecting system are independent with each other, the production master information conventionally has to be changed for each system when the product master information is changed. On the other hand, in the present invention, since the master information transferring step is provided, when the product master information is changed in the production planning system, the contents of the change is transferred to the actual production data collecting system, the product master information is not necessary to be changed in the actual production data collecting system, so that the information management between both of the systems can be simplified.

When the integrated business solution includes an inventory and purchase management system for controlling product stocks and material procurement, the product plan rewriting step may preferably directly output the corrected production plan to the inventory and purchase management system.

Since the corrected production plan is directly outputted to the inventory and purchase management system, the corrected production plan rewritten by the production planning system is not necessary to be outputted from the production planning system to the inventory and purchase management system, information can be smoothly transferred.

When the production planning system and the actual production data collecting system are used for management in a process industry and when the production facilities successively produce more than one product, the present invention may preferably be applied.

Since there can be great difference between the production plan and the actual production in the above arrangement, the present invention can be effectively applied.

Though the present invention is used as an information transferring method as in the above, the present invention can be constructed as a computer software program for implementing the information transferring method according to the present invention and a computer-readable recording medium storing the program. The same functions and effects can be obtained by installing to predetermined hardware.

According to the recording medium, the present invention can be constructed simply by installing the program to a conventional system having a general integrated business solution and a production control system, thereby further enhancing the applicability of the present invention.

According to a further aspect, the invention consists in a production planning system as set forth in claim 8.

A particular embodiment of the invention will now be described with reference to the accompanying drawings; in which:-
Fig. 1 is a block diagram showing an arrangement of a system according to an embodiment of the present invention;
Fig. 2 is a block diagram showing an information transferring arrangement between an integrated business solution and a production control system in the aforesaid embodiment;
Fig. 3 is a schematic view illustrating processes of information transferring method of the aforesaid embodiment;
Fig. 4 is a schematic view illustrating a difference between a production plan and an actual production;
Fig. 5 is a schematic view illustrating processes for deleting a planned order and registering actual order in the aforesaid embodiment; and
Fig. 6 is a schematic view illustrating processes for deleting a planned order and registering actual order in a modification of the aforesaid embodiment.

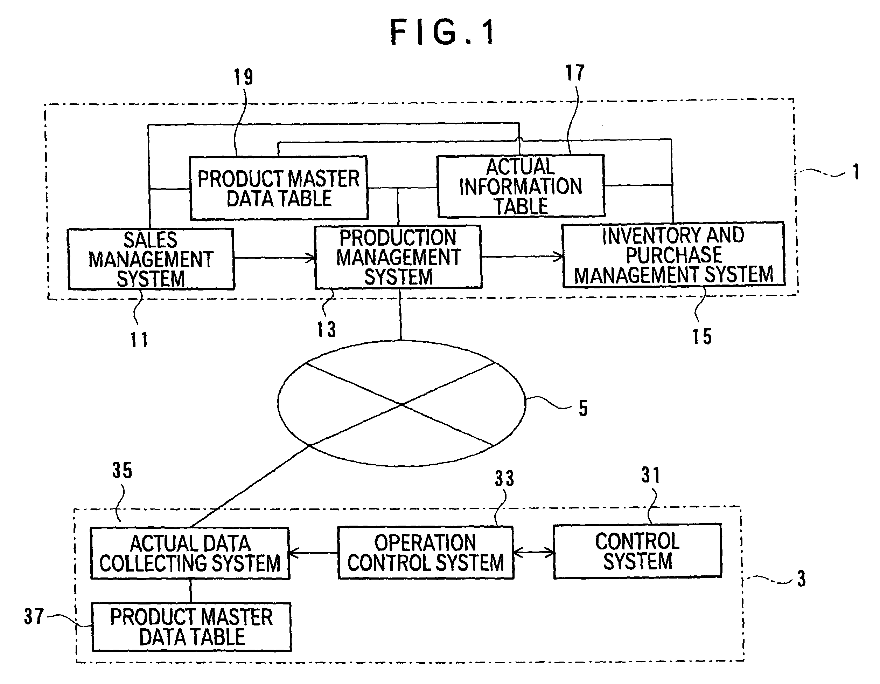

A system according to the present invention is constructed as a system for controlling works of a company, which includes an integrated server 1, a local server 3 and a network 5 connecting the servers 1 and 3, as shown in Fig. 1. Incidentally, the system is constructed as a system for a company manufacturing and selling synthetic resin such as PP and PE. The network 5 is a LAN (Local Area Network) built in the company.

The integrated server 1 has an integrated business solution (ERP system) for controlling company-wide business, the ERP system including a sales management system 11, a production management system 13 and an inventory and purchase management system 15. The ERP system is constructed as a program executed on an OS (Operating System) for controlling operation of the integrated server 1 and includes an administrative accounting system and a financial accounting system (not shown) as well as the above-mentioned sales management system 11, the production management system 13 and the inventory and purchase management system 15. The information on the entire business in the company is concentrated in the ERP system. The concentrated information is stored in an actual information table 17 and a product master data table 19 set in a storage device of the integrated server 1.

The sales management system 11 collects a sales achievement of sales department of the company and generates a sales plan based on the sales achievement. The sales achievement collected by the sales management system 11 is registered in the actual information table 17 and the generated sales plan is output to the production management system 13.

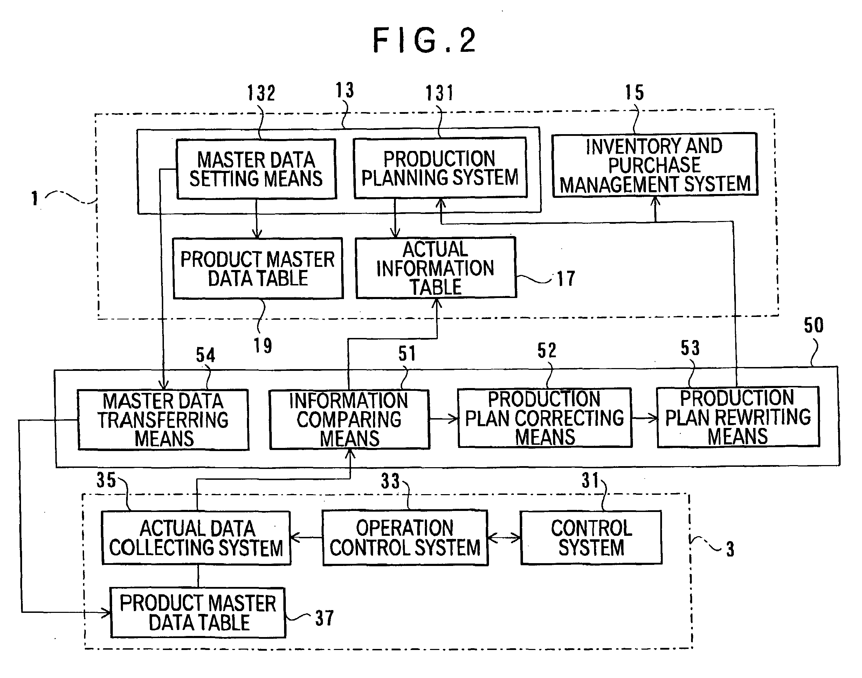

The production management system 13 generates production plan based on the sales plan generated by the sales management system 11 and collects the actual production based on the production plan, which includes a production planning system 131 and a master data setting means 132 as shown in Fig. 2.

The production planning system 131 prepares a production plan for every month based on the sales plan generated by the sales management system 11 and generates a planned order for each day production. Information on when (date and time) and on which plant (location) how much (amount) of what (product) should be how (production method) produced is specified in the planned order, and the respective production facilities produce the products based on the planned order. Incidentally, since manufacturing condition has to be adjusted in accordance with composition of the procured material etc., the information on production method includes instructions to produce in accordance with a predetermined production recipe.

The master data setting means 132 sets the product master data table 19 storing product numbers and product items, thereby setting product numbers and product items of a new product.

The inventory and purchase management system 15 controls stocks of a produced product and procurement of the material based on the production plan. Actual stocks information of the product and procurement management information of the material are registered in the actual information table 17.

The local server 3 has a production control system provided in the respective factories for controlling production of the product, the production control system including a control system 31, an operation control system 33, an actual production data collecting system 35 and a production master information table 37. The production control system controls production of the synthetic resin PP, where sequential processes for manufacturing PP from propylene, i.e. catalyst preparation process, polymerization process, monomer recovery process, catalyst removing process, APP (atactic polypropylene) separating process, drying process and solvent refining process are managed.

The control system 31 controls devices of the manufacturing facilities for implementing the above respective processes and controls the operation of the devices based on the plant information detected by a sensor provided in the respective devices.

The operation control system 33 controls operating the entire factories. The operation information of the respective production facilities is acquired by the control system 31 and is concentrated in the operation control system 33 for preparing a plant daily report.

The achievement collecting system 35 generates an actual production data based on the plant daily report generated by the operation control system 33 to output to the integrated server 1.

The information is transferred between the integrated server 1 installed with the ERP system and the local server 3 installed with the production control system through an interface system 50 for transferring information as shown in Fig. 2. The interface system 50 is a program executed on an OS of the integrated server 1 and includes an information comparing means 51, a production plan correcting means 52, a production plan rewriting means 53 and a master data transferring means 54. In other words, the interface system 50 is an application annexed to the ERP system.

The information comparing means 51 compares the actual production data output by the actual production data collecting system 35 of the local server 3 and the production plan outputted by the production planning system 131 and, when the actual production in accordance with the production plan is obtained, registers the actual production data on the actual information table 17. The information comparing means 51 executes the production plan correcting means 52 when deviation is caused between the production plan and the actual production.

The production plan correcting means 52 corrects the production plan and generates a production plan matching with the actual production when deviation between the production plan and the actual production occurs. For instance, when the actual production data indicating that three types of PP, i.e. grade A, grade B and grade C are actually manufactured is collected in spite of instructions by the production command of the production plan requesting production of grade A PP and grade C PP. the production plan correcting means 52 post-generates (i.e. generates after production) an actual order based on the actual production showing production of three types of PP, i.e. grade A, grade B and grade C.

The production plan rewriting means 53 outputs the actual order corrected and generated by the production plan correcting means 52 to the production planning system 131 and rewrites the planned order according to the originally generated production plan to the corrected actual order. The production plan rewriting means 53 directly outputs the corrected actual order to the inventory and purchase management system 15. The inventory and purchase management system 15 controls product stocks and material procurement based on the corrected actual order.

The master data transferring means 54 converts the production master information set by the master data setting means 132 of the production management system 13 so as to fit to the production control system of the local server 3 and outputs to the production master information table 37 of the production control system. When the production master information is set by the master data setting means 132 to be registered in the production master information table 19 of the ERP system and simultaneously activates the master data transferring means 54, the product master data table 37 of the production control system is automatically updated (master information transferring step).

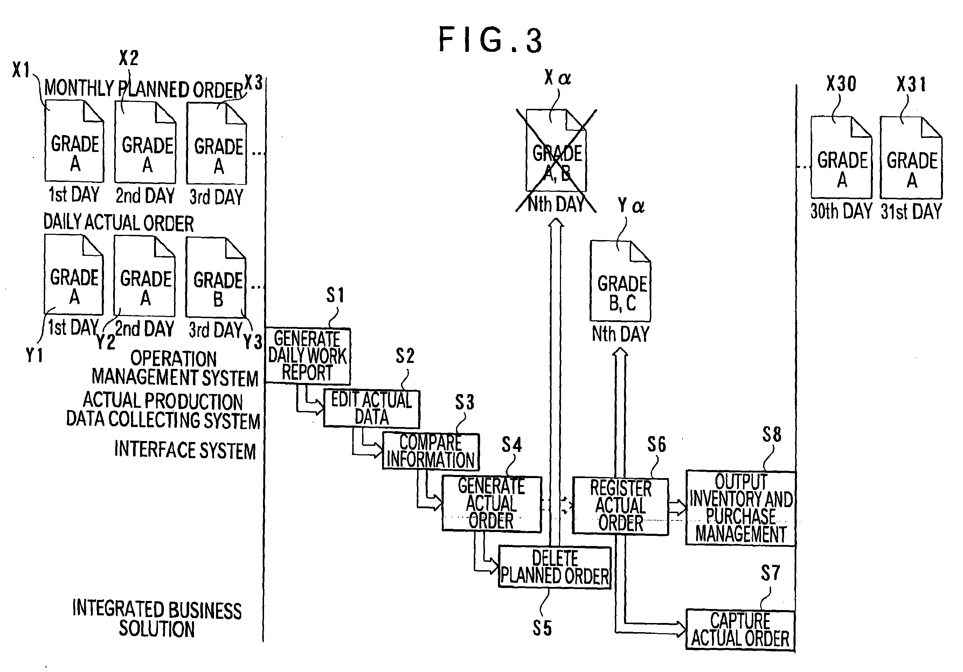

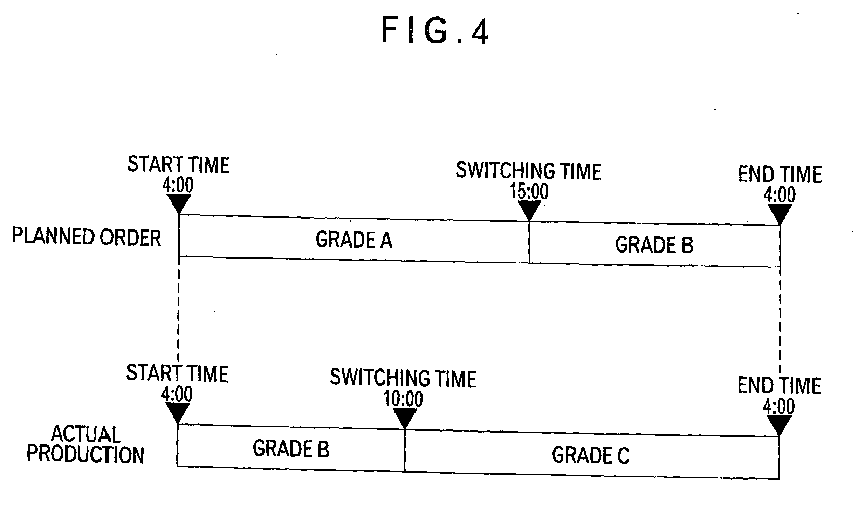

Next, the operation of the system according to the above-described present embodiment will be described below with reference to Figs. 3 and 4.

As shown in Fig. 3, the production planning system 131 generates next-month production plan as each-day planned orders X1, X2...X30 and X31 at the end of the month.

The factory controls daily production based on the planned orders X1, X2...X30 and X31. As shown in Fig. 4, an example is assumed that: on a day of a month; a planned order requesting production of grade A PP from start time 4:00 to 15:00 and grade B PP from 15:00 to end time of next-day 4:00; and, in actual production line, grade B PP is produced from start time 4:00 to 10:00 and grade C PP is produced from 10:00 to end time of next-day 4:00.

The operation control system 33 creates daily reports based on the control operation information obtained by the control system 31 after terminating production, as shown in Fig. 3 (process S1). The daily report includes information such as grade of manufactured PP, grade transition time, charge into polymerization reactor per hour, actual production of PP of the grade and actual consumption of the material.

The daily report created by the operation control system 33 is output to the actual production data collecting system 35. The actual production data collecting system 35 edits the information written on the daily report so that the production management system 13 can capture the information (process S2) and subsequently outputs the converted information to the interface system 50.

The information comparing means 51 of the interface system 50 compares the daily report achievement after being converted and the contents of the planned order, and specifies the planned order Xα based on the plant information and date information registered in the daily report achievement (process S3: information comparing step).

After the planned order Xα in accordance with the actual production data is specified, the production plan correcting means 52 creates an actual order Yα based on the actual production (process S4: production plan correcting step) and, after the actual order Yα is created, executes the production plan rewriting means 53 to delete planned order Xα (process S5) and register actual order Yα (process S6: production plan rewriting step).

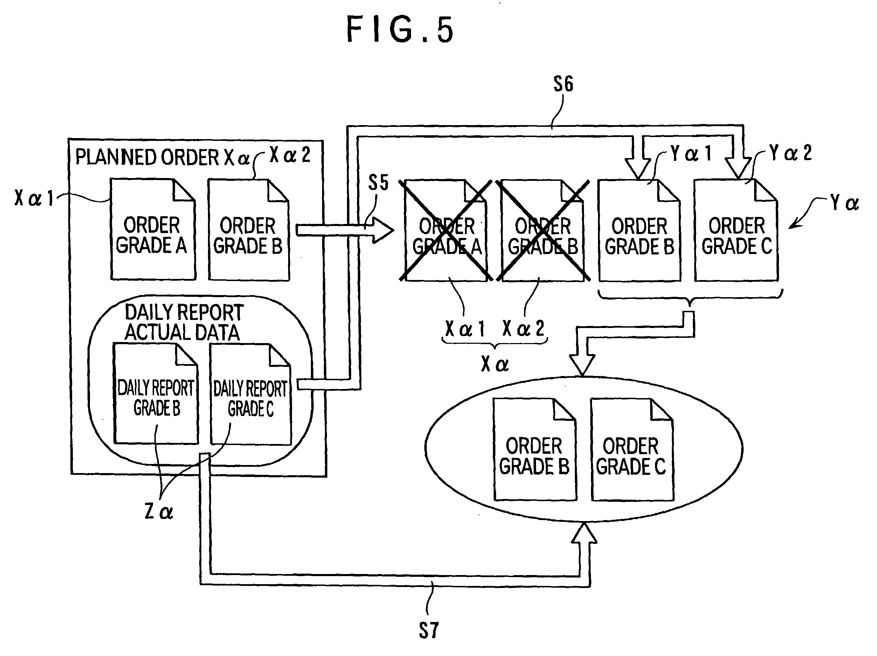

Specifically, as shown in Fig. 5, when the planned order Xα is composed of two commands Xα1 and Xα2, the production plan rewriting means 53 deletes both of the commands Xα1 and Xα2 (process S5) and registers commands Yα1 and Yα2 constituting the actual order Yα created by the production plan correcting means 52. Incidentally, in Fig. 5, since the grades of commands Xα2 and Yα1 are common, the command Xα2 may be used without being deleted. However, in the present embodiment, the planned order Xα is specified based on the plant information and the date information and deletion and registration are conducted without considering consistency of the grade, thereby simplifying the process.

After terminating rewriting of the actual order Yα, since the consistency between the actual order Yα and the actual production data Zα can be secured as shown in Fig. 5, the production management system begins capturing the actual production data Zα (process S7). On the other hand, the production plan rewriting means 53 outputs the actual order Yα created by the production plan correcting means 52 to the inventory and purchase management system 15 (process S8).

The inventory and purchase management system 15 controls product stocks and manage material procurement with the use of production amount and consumption amount relating the corrected actual order Yα.

The above sequence of processes is conducted every day, where the planned orders X1, X2, X3...X30, X31 created by the production planning system 131 are substituted every day by the actual orders Y1, Y2, Y3...based on the actual production and the actual production based on the actual orders Y1, Y2, Y3...is registered to the actual information table 17.

According to the present embodiment, the following advantages can be obtained.

Since the information comparing step is provided, the production plan Xα corresponding to the actual production data can be specified by comparing the actual production data and the production plan. Since the production plan correcting step S4 is provided, the actual order Yα based on the actual production can be created. Further, since the production plan rewriting step S6 is provided, the actual orders Y1, Y2, Y3... corresponding to the actual production can be set as the production plan of the ERP system. Accordingly, the achievement data can be smoothly captured into the actual information table 17 of the ERP system.

Further, since the production planning system 131 is constructed as a part of the ERP system and the once-issued planned order is difficult to be changed within the ERP system on account of relationship with the sales management system 11 and the inventory and purchase management system 15, the interface system 50 is effectively introduced.

Further, since the interface system 50 has the master information transferring step, when the arrangement of the production master information table 19 is altered by the ERP system, the change in the arrangement is reflected to the production master information table 37 within the local server 3, so that the product master information is not necessary to be changed within the respective servers 1 and 3, so that the information between the systems can be simply controlled.

Since the interface system 50 directly outputs the actual order Yα created by the production plan correcting step S4 to the inventory and purchase management system 15, the information can be simply transmitted and received between the production management system 13 and the inventory and purchase management system 15 of the ERP system, thus streamlining information transmission.

Since the present system is used for controlling production facilities manufacturing more than two types of PP having different grades, the deviation between the production plan and the actual production inherent to the process industry can be absorbed by the interface system 50, so that the ERP system can be effectively utilized.

Incidentally, the scope of the present invention is not restricted to the above embodiment but includes the following modifications.

In the above embodiment, as shown in Fig. 5, the planned order Xα is specified based on the plant information and the data information in the information comparing step 53 and the planned order Xα is deleted in the production plan rewriting step by deleting two types of commands Xα1 and Xα2. However, the arrangement is not limited.

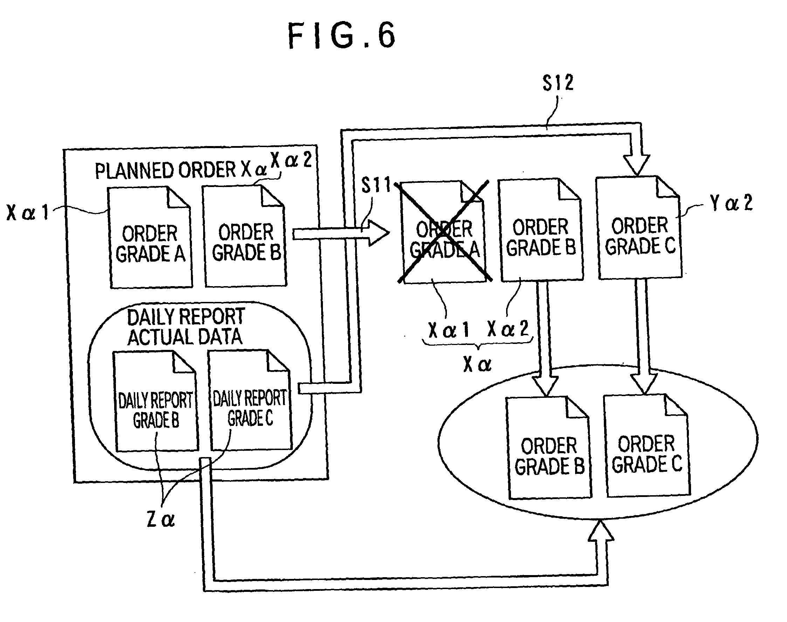

Specifically, as shown in Fig. 6, in specifying the planned order during the information comparing step, the grade information of the product to be manufactured may be taken into account as well as the plant information and the date information, so that only the command Xα1 inconsistent with the actual production data Zα may be deleted (process S11) and only the command Yα2 lacking in the planned order Xα may be created in the production plan correcting step S12, thereby capturing the actual production data Zα based on the commands Xα1 and the Yα2.

Though the information transferring method according to the present invention is used in facilities for producing PP of different grade in the above embodiment, the arrangement is not limited. For instance, the information transferring method according to the present invention may be used for manufacturing a plurality of products by the same production facilities such as medicines and foods.

Though the interface system 50 is arranged as an external system annexed to the ERP system in the above embodiment, the interface system 50 may be arranged as a part of the ERP system.

Though the ERP system has the sales management system 11, the production management system 13, the inventory and purchase management system 15, the administrative accounting system and the financial accounting system, a human resources control system may be added thereto.

## Claims

1. An information transfer method for transferring information between a production planning system (131) for generating a production plan of a product using production facilities and an actual production data collecting system (35) for collecting actual production data obtained by producing the product based on the production plan, **characterized by**:
an information comparing step (S3) for comparing the actual production data collected by the actual production data collecting system (35) and the production plan generated by the production planning system (131) to specify a production plan corresponding to the actual production data;
a production plan correcting step (S4) for correcting the production plan specified by the information comparing step (S3) based on the actual production data; and
a production plan rewriting step (S6) for rewriting the production plan generated by the production planning system (131) to correspond with the production plan corrected by the production plan correcting step (S4).

2. The information transferring method according to claim 1, wherein the production planning system (131) is arranged as a part of an integrated business solution for integrally managing sales, production, inventory and purchase of the product.

3. The information transferring method according to claim 2, the production planning system (131) including a production master data setting means for setting a product master information such as product number of the product, material thereof and item name, the method further comprising:
a master information transferring step for transferring the product master information set by the product master data setting means to the actual production data collecting system (35).

4. The information transferring method according to claim 2 or claim 3,
wherein the integrated business solution includes an inventory and purchase management system (15) for controlling product stocks and material procurement, and
wherein the product plan rewriting step (S6) can directly output the corrected production plan to the inventory and purchase management system (15).

5. The information transferring method according to any one of claims 1 to 4, wherein the production planning system (131) and the actual production data collecting system (35) are used for management in a process industry, and
wherein the production facilities can successively produce more than one product.

6. A computer software program for implementing the information transferring method according to any one of claims 1 to 5.

7. A computer-readable recording medium storing a computer software program for implementing the information transferring method according to any one of claims 1 to 5.

8. A production management system (13) for managing the production of a product including a production planning system (131) which generates a production plan for the product,
an actual production data collecting system (35) which collects actual production data obtained by producing the product based on the production plan,
**characterized by** an interface system (50) which transfers information between the production planning system (131) and the actual production data collecting system (35), the interface system including:
information comparing means (51) for comparing the actual production data collected by the actual production data collecting system (35) and the production plan generated by the production planning system (131) to specify a production plan corresponding to the actual production data;
production plan correcting means (52) for correcting the production plan specified by the information comparing means (51) based on the actual production data; and
production plan rewriting means (53) for rewriting the production plan generated by the production planning system (131) to correspond with the production plan corrected by the production plan correcting means (52).
